# EUROPEAN PATENT SPECIFICATION

(11) **EP 1 720 935 B1**
(45) Date of publication and mention of the grant of the patent: **07.07.2010**
(21) Application number: 04711214.9
(22) Date of filing: 13.02.2004
(51) Int. Cl.: C08J 5/00

(54) **SCREED MOLD METHOD**
GLÄTTFORMVERFAHREN
PROCEDE DE MOULAGE PAR ARASEMENT

(43) Date of publication of application: 15.11.2006
(73) Proprietor: Edizone, L.C., Alpine, UT 84004 (US)
(72) Inventor: PEARCE, Tony, M., Alpine, UT 84004 (US)
(74) Representative: Price, Nigel John King
(86) International application number: PCT/US2004/004382
(87) International publication number: WO 2005/087847

(56) References cited:
- US-B1- 6 264 860
- US-B1- 6 299 817
- US-B1- 6 413 458

## Description

### BACKGROUND

This disclosure relates to manufacturing processes using open-faced molds which are useful in manufacturing moldable materials, such as thermoplastic materials, and are particularly useful in manufacturing elastomeric articles including articles comprising elastomeric gel. The methods and structures are especially useful in open-face molding of materials which are of high viscosity or otherwise have a difficulty in flowing into the cavities of an open-faced mold.

US 6,413,458 discloses a method for manufacturing a gelatinous elastomer article comprising a series of steps. The steps include selecting a plasticizer, selecting a triblock copolymer of the general configuration A-B-A, mixing the plasticizer and triblock copolymer such as by melt blending or use of a compounding screw in order to produce a gelatinous elastomer, permitting the gelatinous elastomer to cool, selecting a forming device such as a die or mold, melting the gelatinous elastomer, and forcing the gelatinous elastomer into the forming device in order to form a gelatinous elastomer part.

### SUMMARY

Screed molding methods are disclosed.

The present invention provides a screed mold method for making gelatinous elastomer gel cushioning articles, the method comprising the steps of: obtaining a screed mold, the screed mold having a rigid body, the screed mold being an open face mold, the screed mold having a structural shape in said rigid body in which gel may be formed to take on a desired geometric structure, said structural shape including slots in said rigid body, obtaining access to an injection head, said injection head having a plurality of distribution channels therein through which thermoplastic material may flow, said distribution channels terminating in exit ports through which thermoplastic material may exit said injection head and enter said screed mold, accessing a pumping source, utilizing said pumping source to pressurize thermoplastic material and force it into said injection head, through said distribution channels of said injection head, out of said exit ports of said injection head, into said screed mold, through said slots in said screed mold and out of said screed mold, and receiving a cushioning element molded by said screed mold.

### BRIEF DESCRIPTION OF THE DRAWINGS

Figures 1 and 1A depict an example screed mold.
Figures 2,2A and 2B depict other views of an example screed mold.
Figure 3 depicts an example gel mattress component made by a screed mold method.

### DETAILED DESCRIPTION

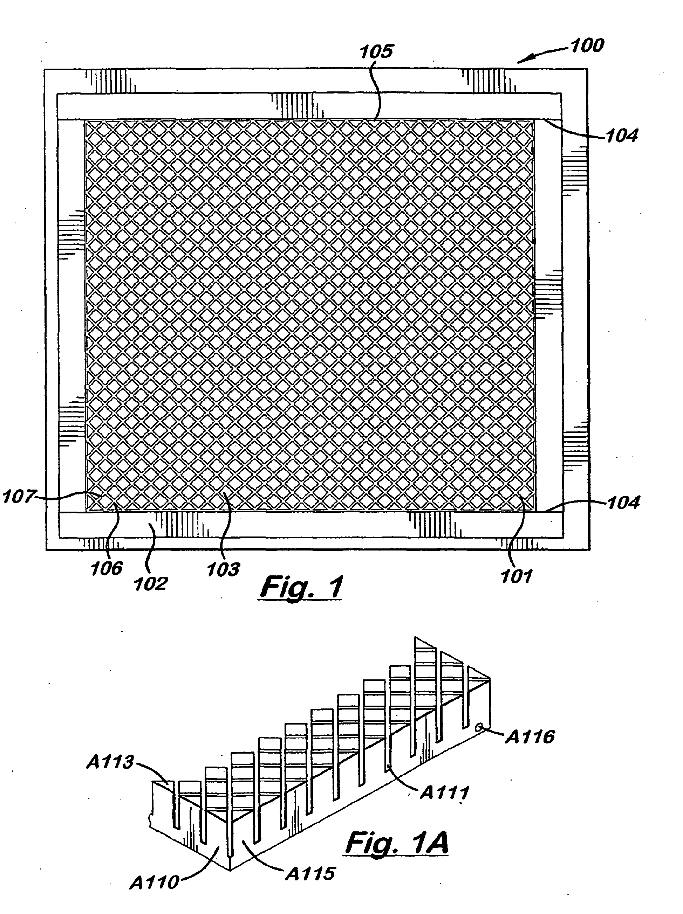

FIG. 1 depicts the top face of an open faced mold 100, in this case an open faced mold for a mattress topper. The mold 100 is one component of an embodiment. The open faced mold 100 is further characterized as comprising a honeycomb 104. The honeycomb 104 is made up of slots 101 (perpendicularly or at other angles) crisscrossing each other from side rails 102 which surround the perimeter 105 of the honeycomb 104. Slots 101 are spaced so that square [(or other shaped)] mold cores 103 are distributed throughout the honeycomb 104. The mold 100 may be created in a variety of sizes for any desired size mattress. When the mattress has a foam perimeter border (not shown) of approximately 15 cm, the gel honeycomb **104** would have a length of about 170 cm and a width of about 120 cm. In this embodiment, the slots **101** have a depth of about 7 cm and the mold cores **103** concurrently have a height of 7 cm.

In one embodiment, the mold **100** is made of a metal plate **A110** as depicted in FIG. 1A. The slots **A111** may be manufactured in the mold **100** by machining with a circular saw blade (or other cutting tool) about 80% through the thickness of a metal plate **A110** forming mold cores **A113. In** other embodiments, the mold **100** may be made of a non-deforming polymer such as plastic..., wood, ceramic or other material not subject to deformation at the temperature of injection. After slots **A111** are machined, the perimeter **A115** is milled off, to 80% or up to 100% depth. Bolt holes **A116** are drilled in the metal plate **A110.**

Referring again to FIG. 1, mold **100** can be bolted or otherwise affixed to four side rails **102.** Side rails **102** may be made of various materials including metallic and non-metallic materials. Aluminum may be used in one embodiment for quick heating and cooling. In another embodiment steel can serve as an appropriate material for the side rails. In still another embodiment, non-metallic materials could be used.

As shown in FIG. 1, the honeycomb **104** displays a pattern for slots **101.** As an example, slots **101** form a 45 degree angle with the perimeter **105** of the mold **100.** In this "x" configuration, thermoplastic material (not shown) which is introduced into the mold with a flow path in the "up" direction of FIG. 1 can easily flow around the mold cores **103.** In an alternative embodiment, slots **101** form a 90 degree angle with the perimeter **105** to form a "+" configuration. A gel honeycomb **104** in the "x" configuration results in the injected material meeting at a corner **106** instead of a center **107** of a mold core **103** and then continuing to flow around an adjacent core. In contrast, the inventors' experience with the "+" configuration results in molten material meeting at a center **107** of a mold core **103.** When the molten material fills the honeycomb **104** in this manner, knit lines might be introduced in the molded part, which can weaken the part..

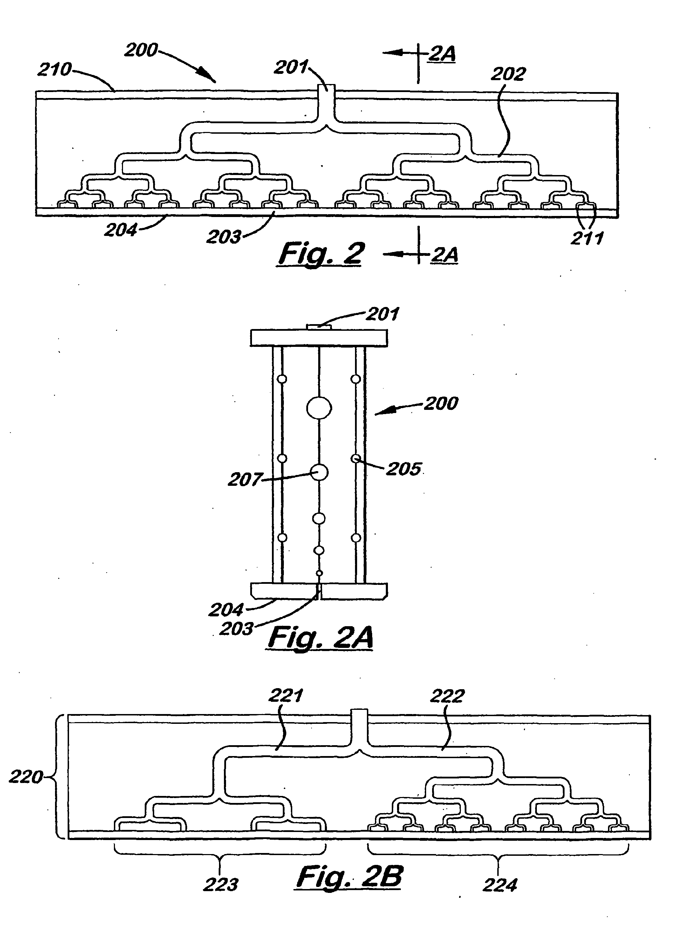

Another component in the embodiments is depicted in FIG. 2. FIG 2. shows a cross sectional view of injection head **200.** Injection head **200** comprises a top face **210** and a bottom face **204.** In the top face **210,** an inlet **201** opens to a network of distribution channels **202.** Molten material (not shown) enters the inlet **201** and flows throughout distribution channels **202** until the material exits outlets **211** at the bottom face **204** and into slot **203.** The distribution channel begins at the inlet **201** as one channel and divide into two channels symmetrically.

The distribution channels **202** can divide again and again until there are several channels. The more frequently the channels divide, the more outlets **211** will appear in the slot **203.** The advantage of increasing the number of outlets is that it allows for more uniform distribution of molten material into the slot. As depicted in FIG. 2, the distribution channels in one embodiment divide with uniform frequency and with uniform distribution of outlets.

In another embodiment, depicted in FIG. **2B**, distribution channels do not divide with uniform frequency and uniformity of distribution outlets. In this embodiment, molten material flows through distribution head **220** more readily to distribution channel **221** and less readily to distribution channel **222.** When the injection head **220** is configured in this way, an uneven distribution of molten material can be applied to a suitable mold which has an uneven requirement for injected material. One skilled in the art can appreciate that a side of a mold with greater material volume demands could be fed by outlets **223** coming from distribution channel **221** and a side of a mold with lesser material volume demands can be fed by outlets **224** coming from distribution channel **222.** By way of example, if the product to be molded is thicker in the center and thinner along the edges, greater material flow is desired in the center than along the edges. Larger exit holes and/or more exit holes in a particular area of the head would facilitate greater flow in that area of the head. Those skilled in the art of extrusion dies will appreciate how to control flow in the head. Optimally, the head should be constructed so that there are no dead spots where flow stops and material collects. It is important to have continuous flow of molten material so that when the head is heated, there is no non-moving material to degrade over time.

Referring to FIG. 2A, wherein a distribution head **200** is depicted as a cross-sectional side view, distribution channels **202** are shown as cross-sectional tubes **207.** Heating elements and/or cooling channels **205** are distributed throughout the distribution head **200** to heat or maintain the temperature of the molten materials as it passes through the distribution channels **202.** The heating elements may be fixed cartridges in the distribution head or may also be circulating tubes through which a heated fluid may pass through. Cooling channels are circulating tubes through which a cooled fluid may pass. In other embodiments, the distribution head can be simplified so that the molten material is pumped into a single heated reservoir within a head and exits at drilled holes along the length of the reservoir.

In another aspect of the embodiments, the distribution head **200** acts as a screed. A screed levels off a surface. These surfaces may be horizontal or vertical or any other angle, and may be flat or contoured.

### Process steps

A process for molding thermoset parts or thermoplastic parts or gelatinous elastomer parts is also described. The first step in the process requires a pumping source (typically an extruder) to push a flowable (typically thermosettable liquid and more typically molten thermoplastic) material into a flow-distributing head. The flowable material exits the flow-distributing head at multiple ports into an open-faced mold. The flow-distributing head and open-faced mold must be relatively flush with one another. The flow-distributing head and the open-faced mold are passed relative to each other as the flowable material is distributed into the mold. As the two components move with close proximity, the head serves as a screed. The head screeds molten material from the top of the mold leaving most of the material only in the mold's cavities.

In one aspect of the methods and structures the distance between the flow-distributing head and the open-faced mold can be adjusted. With greater distances between the head and the mold, an excess of flowable material increases the thickness of the layer intended to be a permanent part of the molded product. Likewise, when smaller distances stand between the head and the mold, the amount of molten material decreases and the layer thins on the molded product. An advantage of the methods and structures when the head and mold are in close proximity enables additional pressure of the molten material in the cavities of the mold completely filling the mold and strengthening knit line interfaces. The pressure drives even high-viscosity or low-flow materials into the cavities of the mold. Furthermore, the number and degree of knit lines are less of a problem in the methods and structures because in the screeding process, the molten material is better mixed.

In one embodiment, mold **100** moves beneath head **200** in close proximity. Concomitantly, molten material is pumped into head **200** at inlet **201** and passes through flow distribution channels **202.** Both the molten material and head **200** are heated by cartridge heaters **205.** The molten material exits the head **200** also referred to as a screed head at outlets **211** into slot **203.** Molten material in slot **203** thus flows into the slots **101** of mold **100** in a uniform fashion. As mattress mold **100** moves beneath head **200,** the molten get fills slots **101** and the flow front continues to fill slots **101** progressively. The proximity of the bottom face **204** of head **200** to mold **100** should be minimized as much as possible given the constraints of machining tolerances so as to minimize the skin that forms on the top of mold **100.** The skin may be scraped off before the gel cools and resolidifies. Alternatively, if a skin is desired as part of the finished product, the proximity of head **200** to mold **100** should be about the thickness of the desired skin.

After one application process, the mold would be cooled, typically by water. Likewise, the part cast in the mold is cooled and removed by grabbing and stretching it until the part separates from mold **100.** In the case of more rigid thermoplastic materials, mold **100** can be transferred to a station which has ejector pins driving the part out of mold **100.**

In yet another aspect of the methods and structures, it is desirable to affix a fabric or other base material to one side of the gel structure. This is accomplished by machining an appropriate mold. The mold is prepared similar to the prior described mold by making cuts all the way through a metal piece (the I-shaped slots) instead of the 80% cut previously described. A fabric is placed between the mold and the platform on which the mold is placed during the molding process. Thus the molten thermoplastic or crosslinkable liquid or etc. goes from the head completely through the mold and stops at the fabric. The molded material seals itself to the fabric and remains sealed once the material is solidified. In this case, the part must be demolded from the fabric side. The design of the molded part must be such that the mold remains intact white machining 100% through the thickness.

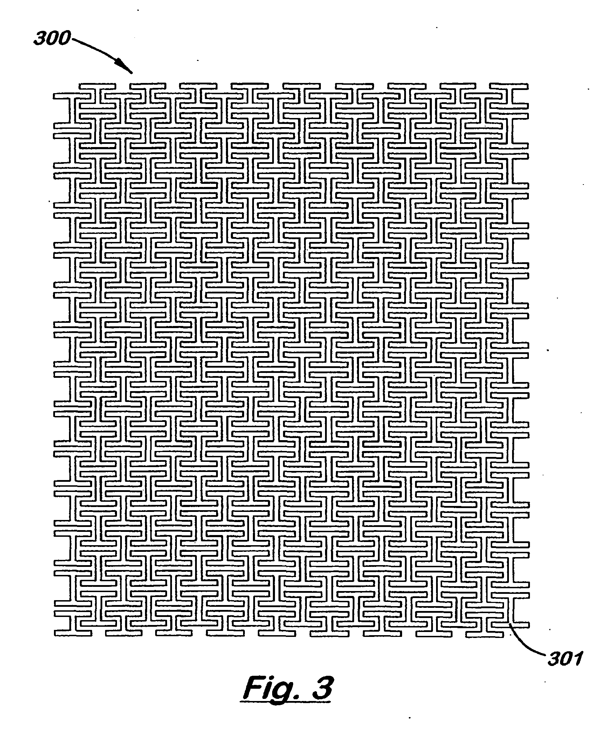

Referring to FIG. 3 which shows a top view of an I-beam shaped gel mattress manufactured by the method described of the methods and structures, gel mattress **300** is made up of I-beam shaped gel members **301.** The mold remains intact as the separate I-beam shapes **301** are machined. In other molding situations, attaching fabric or other base material of any type can be accomplished by laying the material under the mold before sending the mold under the flowing head.

In another embodiment, fabric which is permeable to the flowable material can be placed on the top of the mold. Such fabric may be non-woven, mesh, or screen fabrics. When the flowable material is placed on the top of the mold with a permeable fabric, then material can flow from the head through the fabric. The resulting part is cooled or otherwise solidified and removed from the mold with the fabric intact. Generally the fabric will have material coating it. This method allows fabric to be molded onto the part during the process without having the restrictions on mold configuration incurred by machining 100% through the part.

In yet another aspect of the methods and structures, a continuous molding operation is described. Thermoplastic parts can be molded continuously according to the methods and structures. The parts can be rolled up or cut off at intervals. In one embodiment, the leading edge and the trailing edge of each discrete mold are open in such a manner that the trailing edge of the first mold mates in physical fashion with the leading edge of the second mold. In turn, the trailing edge of the second mold mates in physical fashion with the leading edge of the third mold. This linear compatibility may be continued until the last mold is reached and the product or string of products terminate at the trailing edge of the last mold in the series or alternatively, the leading edge of the first mold mates with the trailing edge of last linear mold.

In another embodiment of the methods and structures, a second continuous molding operation is described. In this operation, continuous parts are generated by molds situated in a continuous loop. The molds might be described as traveling around the loop like treads of a tracked vehicle such as a tank. Molds in this configuration would be end to end and flat with one another during the top and bottom phases of the loop sequence and would separate somewhat as they went around a curve in the loop from top to bottom and then from bottom to top.

In yet another embodiment of the methods and structures, a third continuous molding operation is described and is particularly useful for flexible thermoplastics. In this operational mode, the mold is made in the form of a cylinder with an open-faced mold being on the outer surface of the cylinder and a screed head reasonably flush with the outer surface. In some instances, the bottom face of the screed head may need to be more curved than planar to facilitate appropriate relative distances between the screed head and the mold face. But for many applications of this mode, a planar bottom face will suffice. As the cylinder rotates, the screed head remains stationary.

In many of the embodiments described, the screed head also referred to as a distribution head may be kept stationary and the mold is made to move relative to the head. In other embodiments, the screed head is kept stationary while mold is moved.

In yet another aspect of the methods and structures, the molds may be preheated before being cast with molten thermoplastic materials.

### Materials or Material Formulations

The material to be molded may be any material which is flowable during molding and can be solidified within the mold cavities. This included thermoplastics, resins, thermoset resins, cements, plasters, without limitation to these categories. It is useful for thermoplastic gelatinous elastomer materials.

### a. Elastomer Component

The compositions of the materials for use in the methods and structures may be low durometer (as defined below) thermoplastic gelatinous elastomeric compounds and visco-elastomeric compounds which include a principle polymer component, an elastomeric block copolymer component and a plasticizer component.

The elastomer component of the gel material may include a triblock polymer of the general configuration A-B-A, wherein the A represents a desired polymer such as a monoalkenylarene polymer, including but not limited to polystyrene and functionalized polystyrene, and the B is an elastomeric polymer such as polyethylene, polybutylene, poly(ethylene/butylene), hydrogenated poly(isoprene), hydrogenated poly(butadiene), hydrogenated poly(isoprene+butadiene), poly(ethylene/propylene) or hydrogenated poly(ethylene/butylene+ethylene/propylene), or others. The A components of the material link to each other to provide strength, while the B components provide elasticity. Polymers of greater molecular weight are achieved by combining many of the A components in the A portions of each A-B-A structure and combining many of the B components in the B portion of the A-B-A structure, along with the networking of the A-B-A molecules into large polymer networks.

An example elastomer for making the example gel material is a very high to ultra high molecular weight elastomer and oil compound having an extremely high Brookfield Viscosity (hereinafter referred to as "solution viscosity"). Solution viscosity is generally indicative of molecular weight. "Solution viscosity is defined as the viscosity of a solid when dissolved in toluene at 25-30.degree. C., measured in centipoises (cps). "Very high molecular weight" is defined herein in reference to elastomers having a solution viscosity, 20 weight percent solids in 80 weight percent toluene, the weight percentages being based upon the total weight of the solution, from greater than about 20,000 cps to about 50,000 cps. An "ultra high molecular weight elastomer" is defined herein as an elastomer having a solution viscosity, 20 weight percent solids in 80 weight percent toluene, of greater than about 50,000 cps. Ultra high molecular weight elastomers have a solution viscosity, 10 weight percent solids in 90 weight percent toluene, the weight percentages being based upon the total weight of the solution, of about 800 to about 30,000 cps and greater. The solution viscosities, in 80 weight percent toluene, of the A-B-A block copolymers useful in the elastomer component of the example gel cushioning material are substantially greater than 30,000 cps. The solution viscosities, in 90 weight percent toluene, of the example A-B-A elastomers useful in the elastomer component of the example gel are in the range of about 2,000 cps to about 20,000 cps. Thus, the example elastomer component of the example gel material has a very high to ultra high molecular weight.

Applicant has discovered that, after surpassing a certain optimum molecular weight range, some elastomers exhibit lower tensile strength than similar materials with optimum molecular weight copolymers. Thus, merely increasing the molecular weight of the elastomer will not always result in increased tensile strength.

The elastomeric B portion of the example A-B-A polymers has an exceptional affinity for most plasticizing agents, including but not limited to several types of oils, resins, and others. When the network of A-B-A molecules is denatured, plasticizers which have an affinity for the B block can readily associate with the B blocks. Upon renaturation of the network of A-B-A molecules, the plasticizer remains highly associated with the B portions, reducing or even eliminating plasticizer bleed from the material when compared with similar materials in the prior art, even at very high oil:elastomer ratios. The reason for this performance may be any of the plasticization theories explained above (i.e., lubricity theory, gel theory, mechanistic theory, and free volume theory).

The elastomer used in the example gel cushioning medium is preferably an ultra high molecular weight polystyrene-hydrogenated poly(isoprene+butadiene)-polystyrene, such as those sold under the brand names SEPTON 4045, SEPTON 4055 and SEPTON 4077 by Kuraray, an ultra high molecular weight polystyrene-hydrogenated polyisoprenepolystyrene such as the elastomers made by Kuraray and sold as SEPTON 2005 and SEPTON 2006, or an ultra high molecular weight polystyrene-hydrogenated polybutadiene-polystyrene, such as that sold as SEPTON 8006 by Kuraray. High to very high molecular weight polystyrene-hydrogenated poly(isoprene+butadiene)-polystyrene elastomers, such as that sold under the trade name SEPTON 4033 by Kuraray, are also useful in some formulations of the example gel material because they are easier to process than the example ultra high molecular weight elastomers due to their effect on the melt viscosity of the material.

Following hydrogenation of the midblocks of each of SEPTON 4033, SEPTON 4045, SEPTON 4055, and SEPTON 4077, less than about five percent of the double bonds remain. Thus, substantially all of the double bonds are removed from the midblock by hydrogenation.

Applicant's most example elastomer for use in the example gel is SEPTON 4055 or another material that has similar chemical and physical characteristics. SEPTON 4055 has the optimum molecular weight (approximately 300,000, as determined by Applicant's gel permeation chromatography testing). SEPTON 4077 has a somewhat higher molecular weight, and SEPTON 4045 has a somewhat lower molecular weight than SEPTON 4055. Materials which include either SEPTON 4045 or SEPTON 4077 as the primary block copolymer typically have lower tensile strength than similar materials made with SEPTON 4055.

Kuraray Co. Ltd. of Tokyo, Japan has stated that the solution viscosity of SEPTON 4055, the most example A-B-A triblock copolymer for use in the example gel material, 10% solids in 90% toluene at 25.degree. C., is about 5,800 cps. Kuraray also said that the solution viscosity of SEPTON 4055, 5% solids in 95% toluene at 25.degree. C., is about 90 cps. Although Kuraray has not provided a solution viscosity, 20% solids in 80% toluene at 25.degree. C., an extrapolation of the two data points given shows that such a solution viscosity would be about 400,000 cps. Applicant reads the prior art as consistently teaching away from such high solution viscosities.

Applicant confirmed Kuraray's data by having an independent laboratory, SGS U.S. Testing Company Inc. of Fairfield, N.J., test the solution viscosity of SEPTON 4055. When SGS attempted to dissolve 20% solids in 80% toluene at 25.degree. C., the resulting material did not resemble a solution. Therefore, SGS determined the solution viscosity of SEPTON 4055 using 10% solids in 90% toluene at 25.degree. C., which resulted in a 3,040 cps solution,

Other materials with chemical and physical characteristics similar to those of SEPTON 4055 include other A-B-A triblock copolymers which have a hydrogenated midblock polymer that is made up of at least about 30% isoprene monomers and at least about 30% butadiene monomers, the percentages being based on the total number of monomers that make up the midblock polymer. Similarly, other A-B-A triblock copolymers which have a hydrogenated midblock polymer that is made up of at least about 30% ethylene/propylene monomers and at least about 30% ethylene/butylene monomers, the percentages being based on the total number of monomers that make up the midblock polymer, are materials with chemical and physical characteristics similar to those of SEPTON 4055.

Mixtures of block copolymer elastomers are also useful as the elastomer component of some of the formulations of the example gel cushioning medium. In such mixtures, each type of block copolymer contributes different properties to the material. For example, high strength triblock copolymer elastomers are desired to improve the tensile strength and durability of a material. However, some high strength triblock copolymers are very difficult to process with some plasticizers. Thus, in such a case, block copolymer elastomers which improve the processability of the materials are desirable.

In particular, the process of compounding SEPTON 4055 with plasticizers may be improved via a lower melt viscosity by using a small amount of more flowable elastomer such as SEPTON 8006, SEPTON 2005, SEPTON 2006, or SEPTON 4033, to name only a few, without significantly changing the physical characteristics of the material.

In a second example of the usefulness of block copolymer elastomer mixtures in the example gel materials, many block copolymers are not good compatibilizers. Other block copolymers readily form compatible mixtures, but have other undesirable properties. Thus, the use of small amount of elastomers which improve the uniformity with which a material mixes are desired. KRATON.RTM. G 1701, manufactured by Shell Chemical Company of Houston, Tex., is one such elastomer that improves the uniformity with which the components of the example gel material mix.

Many other elastomers, including but not limited to triblock copolymers and diblock copolymers are also useful in the example gel material. Applicant believes that elastomers having a significantly higher molecular weight than the ultra-high molecular weight elastomers useful in the example gel material increase the softness thereof, but decrease the strength of the gel. Thus, high to ultra high molecular weight elastomers, as defined above, are desired for use in the example gel material due to the strength of such elastomers when combined with a plasticizer.

### b. Additives

### i. Polarizable Plasticizer Bleed-Reducing Additives

Preferably, the gel materials used in the cushions of the methods and structures do not exhibit migration of plasticizers, even when placed against materials which readily exhibit a high degree of capillary action, such as paper, at room temperature.

A example plasticizer bleed-reducing additive that is useful in the example gel cushioning material includes hydrocarbon chains with readily polarizable groups thereon. Such polarizable groups include, without limitation, halogenated hydrocarbon groups, halogens, nitrites, and others. Applicant believes that the polarizability of such groups on the hydrocarbon molecule of the bleed-reducing additive have a tendency to form weak van der Waals bonding with the long hydrocarbon chains of the rubber portion of an elastomer and with the plasticizer molecules. Due to the great length of typical rubber polymers, several of the bleed-reducers will be attracted thereto, while fewer will be attracted to each plasticizer molecule. The bleed-reducing additives are believed to hold the plasticizer molecules and the elastomer molecules thereto, facilitating attraction between the elastomeric block and the plasticizer molecule. In other words, the example bleed-reducing additives are believed to attract a plasticizer molecule at one polarizable site, while attracting an elastomeric block at another polarizable site, thus maintaining the association of the plasticizer molecules with the elastomer molecules, which inhibits exudation of the plasticizer molecules from the elastomer-plasticizer compound. Thus, each of the plasticizer molecules is preferably attracted to an elastomeric block by means of a bleed-reducing additive.

The example bleed-reducing additives that are useful in the example gel material have a plurality of polarizable groups thereon, which facilitate bonding an additive molecule to a plurality of elastomer molecules and/or plasticizer molecules. It is believed that an additive molecule with more polarizable sites thereon will bond to more plasticizer molecules. Preferably, the additive molecules remain in a liquid or a solid state during processing of the gel material.

The most example bleed-reducing additives for use in the example gel material are halogenated hydrocarbon additives such as those sold under the trade name DYNAMAR.TM. PPA-791, DYNAMAR.TM. PPA-790, DYNAMAR.TM. FX-9613, and FLUORAD.RTM. FC 10 Fluorochemical Alcohol, each by 3M Company of St. Paul, Minn. Other additives are also useful to reduce plasticizer exudation from the example gel material. Such additives include, without limitation; other halogenated hydrocarbons sold under the trade name FLUORAD.RTM., including without limitation FC-129, FC-135, FC-430, FC-722, FC-724, FC-740, FX-8, FX-13, FX-14 and FX-189; halogentated hydrocarbons such as those sold under the trade name ZONYL.RTM., including without limitation FSN 100, FSO 100, PFBE, 8857A,.TM., BA-L, BA-N, TBC and FTS, each of which are manufactured by du Pont of Wilmington, Del.; halogenated hydrocarbons sold under the trade name EMCOL by Witco Corp of Houston, Tex., including without limitation 4500 and DOSS; other halogenated hydrocarbons sold by 3M under the trade name DYNAMAR.TM.; chlorinated polyethylene elastomer (CPE), distributed by Harwick, Inc. of Akron, Ohio; chlorinated paraffin wax, distributed by Harwick, Inc.; and others.

### ii. Detackifiers

The example material may include a detackifier. Tack is not a desirable feature in many potential uses for the cushions of the methods and structures. However, some of the elastomeric copolymers and plasticizers useful in the example cushioning media for the cushioning elements of the methods and structures may impart tack to the media.

Soaps, detergents and other surfactants have detackifying abilities and are useful in the example gel material. "Surfactants," as defined herein, refers to soluble surface active agents which contain groups that have opposite polarity and solubilizing tendencies. Surfactants form a monolayer at interfaces between hydrophobic and hydrophilic phases; when not located at a phase interface, surfactants form micelles. Surfactants have detergency, foaming, wetting, emulsifying and dispersing properties. Sharp, D. W. A., DICTIONARY OF CHEMISTRY, 381-82 (Penguin, 1990). For example, coco diethanolamide, a common ingredient in shampoos, is useful in the example gel material as a detackifying agent. Coco diethanolamide resists evaporation, is stable, relatively non-toxic, non-flammable and does not support microbial growth. Many different soap or detergent compositions could be used in the material as well.

Other known detackifiers include glycerin, epoxidized soybean oil, dimethicone, tributyl phosphate, block copolymer polyether, diethylene glycol mono oleate, tetraethyleneglycol dimethyl ether, and silicone, to name only a few. Glycerine is available from a wide variety of sources. Witco Corp. of Greenwich, Conn. sells epoxidized soybean oil as DRAPEX 6.8. Dimethicone is available from a variety of vendors, including GE Specialty Chemicals of Parkersburg, W.Va. under the trade name GE SF 96-350. C.P. Hall Co. of Chicago, III. markets block copolymer polyether as PLURONIC L-61. C.P. Hall Co. also manufactures and markets diethylene glycol mono oleate under the name Diglycol Oleate--Hallco CPH-I-SE. Other emulsifiers and dispersants are also useful in the example gel material. Tetraethyleneglycol dimethyl ether is available under the trade name TETRAGLYME from Ferro Corporation of Zachary, La. Applicant believes that TETRAGLYME also reduces plasticizer exudation from the example gel material.

### iii. Antioxidants

The example gel material also includes additives such as an antioxidant. Antioxidants such as those sold under the trade names IRGANOX.RTM. 1010 and IRGAFOS.RTM. 168 by Ciba-Geigy Corp. of Tarrytown, N.Y. are useful by themselves or in combination with other antioxidants in the example materials of the methods and structures.

Antioxidants protect the example gel materials against thermal degradation during processing, which requires or generates heat. In addition, antioxidants provide long term protection from free radicals. A example antioxidant inhibits thermo-oxidative degradation of the compound or material to which it is added, providing long term resistance to polymer degradation. Preferably, an antioxidant added to the example gel cushioning medium is useful in food packaging applications, subject to the provisions of 21 C.F.R..sctn. 178.2010 and other laws.

Heat, light (in the form of high energy radiation), mechanical stress, catalyst residues, and reaction of a material with impurities all cause oxidation of the material. In the process of oxidation, highly reactive molecules known as free radicals are formed and react in the presence of oxygen to form peroxy free radicals, which further react with organic material (hydro-carbon molecules) to form hydroperoxides.

The two major classes of antioxidants are the primary antioxidants and the secondary antioxidants. Peroxy free radicals are more likely to react with primary antioxidants than with most other hydrocarbons. In the absence of a primary antioxidant, a peroxy free radical would break a hydrocarbon chain. Thus, primary antioxidants deactivate a peroxy free radical before it has a chance to attack and oxidize an organic material.

Most primary antioxidants are known as sterically hindered phenols. One example of sterically hindered phenol is the C.sub.73 H.sub.108 O.sub.12 marketed by Ciba-Geigy as IRGANOX.RTM. 1010, which has the chemical name 3,5-bis(1,1-dimethylethyl)-4-hydroxybenzenepropanoic acid, 2,2-bis[[3-[3,5-bis(dimethylethyl)-4-hydroxyphenyl]-1-oxopropoxy]methyl]1,3-propa nediyl ester. The FDA refers to IRGANOX.RTM. 1010 as tetrakis[methylene(3,5-di-tert-butyl-4-hydroxyhydrocinnimate)]methane. Other hindered phenols are also useful as primary antioxidants in the example material.

Similarly, secondary antioxidants react more rapidly with hydroperoxides than most other hydrocarbon molecules. Secondary antioxidants have been referred to as hydroperoxide decomposers. Thus, secondary antioxidants protect organic materials from oxidative degradation by hydroperoxides.

Commonly used secondary antioxidants include the chemical classes of phosphites/phosphonites and thioesters, many of which are useful in the example gel material. The hydroperoxide decomposer used by Applicant is a C.sub.42 H.sub.63 O.sub.3 P phosphite known as Tris(2,4-di-tert-butylphenyl)phosphite and marketed by Ciba-Geigy as IRGAFOS.RTM. 168.

It is known in the art that primary and secondary antioxidants form synergistic combinations to ward off attacks from both peroxy free radicals and hydroperoxides.

Other antioxidants, including but not limited to multi-functional antioxidants, are also useful in the example material. Multifunctional antioxidants have the reactivity of both a primary and a secondary antioxidant. IRGANOX.RTM. 1520 D, manufactured by Ciba-Geigy is one example of a multifunctional antioxidant. Vitamin E antioxidants, such as that sold by Ciba-Geigy as IRGANOX.RTM. E17, are also useful in the example cushioning material for use in the cushions of the methods and structures.

The gel material may include up to about three weight percent antioxidant, based on the weight of the elastomer component, when only one type of antioxidant is used. The material may include as little as 0.1 weight percent of an antioxidant, or no antioxidant at all. When a combination of antioxidants is used, each may comprise up to about three weight percent, based on the weight of the elastomer component. Additional antioxidants may be added for severe processing conditions involving excessive heat or long duration at a high temperature.

Applicant believes that the use of excess antioxidants reduces or eliminates tack on the exterior surface of the example gel material. Excess antioxidants appear to migrate to the exterior surface of the material following compounding of the material. Such apparent migration occurs over substantial periods of time, from hours to days or even longer.

### iv. Flame retardants

Flame retardants may also be added to the example gel materials. Flame retardants useful in the cushioning elements of the methods and structures include but are not limited to diatomaceous earth flame retardants sold as GREAT LAKES DE 83R and GREAT LAKES DE 79 by Great Lakes Filter, Division of Acme Mills Co. of Detroit, Mich. Most flame retardants that are useful in elastomeric materials are also useful in the example gel material. In particular, Applicant prefers the use of food grade flame retardants which do not significantly diminish the physical properties of the example gel material.

Chemical blowing agents, such as SAFOAM.RTM. FP-40, manufactured by Reedy international Corporation of Keyport, N.J. and others are useful for making a gel cushioning medium that is self-extinguishing.

### v. Colorants

Colorants may also be used in the example gel materials for use in the cushions of the methods and structures. Any colorant which is compatible with elastomeric materials may be used in the materials. In particular, Applicant prefers to use aluminum lake colorants such as those manufactured by Warner Jenkinson Corp. of St. Louis, Mo.; pigments manufactured by Day Glo Color Corp. of Cleveland, Ohio; Lamp Black, such as that sold by Spectrum Chemical Manufacturing Corp. of Gardena, Calif.; and Titanium Dioxide (white). By using these colorants, the gel material takes on intense shades of colors, including but not limited to pink, red, orange, yellow, green, blue, violet, brown, flesh, white and black.

### vi. Paint

The example gel cushioning medium may also be painted.

### vii. Other additives

Other additives may also be added to the example gel material. Additives such as foaming facilitators, tack modifiers, plasticizer bleed modifiers, flame retardants, melt viscosity modifiers, melt temperature modifiers, tensile strength modifiers, and shrinkage inhibitors are useful in specific formulations of the example gel material.

Melt temperature modifiers useful in the example gel include cross-linking agents, hydrocarbon resins, diblock copolymers of the general configuration A-B and triblock copolymers of the general configuration A-B-A wherein the end block A polymers include functionalized styrene monomers, and others.

Tack modifiers which tend to reduce tack and which are useful in the example gel include surfactants, dispersants, emulsifiers, and others. Tack modifiers which tend to increase the tack of the material and which are useful in the material include hydrocarbon resins, polyisobutylene, butyl rubber and others.

Foam facilitators that are useful in the gel material include polyisobutylene, butyl rubber, surfactants, emulsifiers, dispersants and others.

Plasticizer bleed modifiers which tend to reduce plasticizer exudation from the example material and which are useful therein include hydrocarbon resins, elastomeric diblock copolymers, polyisobutylene, butyl rubber, transpolyoctenylene rubber ("tor rubber"), and others.

Flame retardants useful in the example gel include halogenated flame retardants, non-halogenated flame retardants, and volatile, non-oxygen gas forming chemicals and compounds.

Melt viscosity modifiers that tend to reduce the melt viscosity of the pre-compounded component mixture of the example cushioning medium include hydrocarbon resins, transpolyoctenylene rubber, castor oil, linseed oil, non-ultra high molecular weight thermoplastic rubbers, surfactants, dispersants, emulsifiers, and others.

Melt viscosity modifiers that tend to increase the melt viscosity of the pre-compounded component mixture of the example gel material include hydrocarbon resins, butyl rubber, polyisobutylene, additional triblock copolymers having the general configuration A-B-A and a molecular weight greater than that of each of the block copolymers in the elastomeric block copolymer component of the material, particulate fillers, microspheres, butadiene rubbe r, ethylene/propylene rubber; ethylene/butylene rubber, and others.

Tensile strength modifiers which tend to increase the tensile strength of the example gel material for use in the cushions of the methods and structures include mid block B-associating hydrocarbon resins, non-end-block solvating hydrocarbon resins which associate with the end blocks, particulate reinforcers, and others.

Shrinkage inhibitors, which tend to reduce shrinkage of the gel material following compounding, that are useful in the material include hydrocarbon resins, particulate fillers, microspheres, transpolyoctenylene rubber, and others.

### c. Microspheres

Microspheres may also be added to the example gel material. The gel material may contain up to about 90% microspheres, by volume. In one example microsphere-containing formulation of the example gel material, microspheres make up at least about 30% of the total volume of the material. A second example microsphere-containing formulation of the example gel cushioning medium includes at least about 50% microspheres, by volume.

Different types of microspheres contribute various properties to the material. For example, hollow acrylic microspheres, such as those marketed under the brand name MICROPEARL, and generally in the 20 to 200 micron size range, by Matsumoto Yushi-Seiyaku Co., Ltd. of Osaka, Japan, lower the specific gravity of the material. In other formulations of the gel, the microspheres may be unexpanded DU(091-80), which expand during processing of the example gel cushioning medium, or pre-expanded DE (091-80) acrylic microspheres from Expancel Inc. of Duluth, Ga.

In formulations of the example material which include hollow acrylic microspheres, the microspheres preferably have substantially instantaneous rebound when subjected to a compression force which compresses the microspheres to a thickness of up to about 50% of their original diameter or less.

Hollow microspheres also decrease the specific gravity of the gel material by creating gas pockets therein. In many cushioning applications, very low specific gravities are example. The specific gravity of the example gel cushioning medium may range from about 0.06 to about 1.30, depending in part upon the amount and specific gravity of fillers and additives, including microspheres and foaming agents. In many cushioning applications of the methods and structures, a gel material having a specific gravity of less than about 0.50 is example. When a gel material example for use in cushions according to the methods and structures includes the example microspheres, the microspheres must be dispersed, on average, at a distance of about one-and-a half (1.5) times the average microsphere diameter or a lesser distance from one another in order to achieve a specific gravity of less than about 0.50. A specific gravity of less than about 0.30 is example for use in some cushions according to this methods and structures. Other formulations of the example gel material have specific gravities of less than about 0.65, less than about 0.45, and less than about 0.25.

MICROPEARL and EXPANCEL acrylic microspheres are example because of their highly flexible nature, as explained above, which tend to not restrict deformation of the thermoplastic elastomer. Glass, ceramic, and other types of microspheres may also be used in the thermoplastic gel material, but are less example.

### d. Plasticizer Component

As explained above, plasticizers allow the midblocks of a network of triblock copolymer molecules to move past one another. Thus, Applicant believes that plasticizers, when trapped within the three dimensional web of triblock copolymer molecules, facilitate the disentanglement and elongation of the elastomeric midblocks as a load is placed on the network. Similarly, Applicant believes that plasticizers facilitate recontraction of the elastomeric midblocks following release of the load. The plasticizer component of the example gel cushioning medium may include oil, resin, a mixture of oils, a mixture of resins, other lubricating materials, or any combination of the foregoing.

### i. Oils

The plasticizer component of the example gel material may include a commercially available oil or mixture of oils. The plasticizer component may include other plasticizing agents, such as liquid oligomers and others, as well. Both naturally derived and synthetic oils are useful in the example gel material. Preferably, the oils have a viscosity of about 70 SUS to about 500 SUS at about 100.degree. F. Most example for use in the gel material are paraffinic white mineral oils having a viscosity in the range of about 90 SUS to about 200 SUS at about 100.degree. F.

One embodiment of a plasticizer component of the example gel includes paraffinic white mineral oils, such as those having the brand name DUOPRIME, by Lyondell Lubricants of Houston, Tex., and the oils sold under the brand name TUFFLO by Witco Corporation of Petrolia, Pa. For example, the plasticizer component of the example gel may include paraffinic white mineral oil such as that sold under the trade name LP-150 by Witco.

Paraffinic white mineral oils having an average viscosity of about 90 SUS, such as DUOPRIME 90, are example for use in other embodiments of the plasticizer compone nt of the example gel cushioning medium. Applicant has found that DUOPRIME 90 and oils with similar physical properties can be used to impart the greatest strength to the example gel material.

Other oils are also useful as plasticize rs in compounding the gel material. Examples of representative commercially available oils include processing oils such as paraffinic and naphthenic petroleum oils, highly refined aromatic-free or low aromaticity paraffinic and naphthenic food and technical grade white petroleum mineral oils, and synthetic liquid oligomers of polybutene, polypropene, polyterpene, etc., and others. The synthetic series process oils are oligomers which are permanently fluid liquid non-olefins, isoparaffins or paraffins. Many such oils are known and commercially available. Examples of representative commercially available oils include Amoco.RTM. polybutenes, hydrogenated polybutenes and polybutenes with epoxide functionality at one end of the polybutene polymer. Examples of such Amoco polybutenes include: L-14 (320 M.sub.n), L-50 (420 M.sub.n), L-100 (460 M.sub.n), H-15 (560 M.sub.n), H-25 (610 M.sub.n), H-35 (660 M.sub.n), H-50 (750 M.sub.n), H-1 00 (920 M.sub.n), H-300 (1290 M.sub.n), L-14E (27-37 cst @ 100.degree. F. Viscosity), L-300E (635-690 cst @ 210.degree. F. Viscosity), Actipol E6 (365 M.sub.n), E16 (973 M.sub.n), E23 (1433 M.sub.n) and the like. Examples of various commercially available oils include: Bayol, Bernol, American, Blandol, Drakeol, Ervol, Gloria, Kaydol, Litetek, Marcol, Parol, Peneteck, Primol, Protol, Sontex, and the like.

### ii. Resins

Resins useful in the plasticizer component of the example gel material include, but are not limited to, hydrocarbon-derived and rosin-derived resins having a ring and ball softening point of up to about 150.degree. C., more preferably from about 0.degree. C. to about 25.degree. C., and a weight average molecular weight of at least about 300.

For use in many of the cushions according to the methods and structures, Applicant prefers the use of resins or resin mixtures which are highly viscous flowable liquids at room temperature (about 23.degree. C -). Plasticizers which are fluid at room temperature impart softness to the gel material. Although room temperature flowable resins are example, resins which are not flowable liquids at room temperature are also useful in the material.

The resins most example for use in the example gel material have a ring and ball softening point of about 18.degree. C.; melt viscosities of about 10 poises (ps) at about 61.degree. C., about 100 ps at about 42.degree. C. and about 1,000 ps at about 32.degree. C.; an onset T.sub.g of about -20.degree. C.; a MMAP value of 68.degree. C.; a DACP value of 15.degree. C.; an OMSCP value of less than -40.degree. C.; a M.sub.n of about 385; a M.sub.w of about 421; and a M.sub.z of about 463. One such resin is marketed as REGALREZ.RTM- 1018 by Hercules Incorporated of Wilmington, Del. Variations of REGALREZ.RTM. 1018 which are useful in the example cushioning material have viscosities including, but not limited to, 1025 stokes, 1018 stokes, 745 stokes, 114 stokes, and others.

Room temperature flowable resins that are derived from poly-.beta.-pinene and have softening points similar to that of REGALREZ.RTM. 1018 are also useful in the plasticizer component of the example cushioning medium. One such resin, sold as PICCOLYTE.RTM. S25 by Hercules Incorporated, has a softening point of about 25.degree. C.; melt viscosities of about 10 ps at about 80.degree. C., about 100 ps at about 56.degree. C. and about 1,000 ps at about 41.degree. C.; a MMAP value of about 88.degree. C.; a DACP value of about 45.degree. C.; an OMSCP value of less than about -50.degree. C; a M.sub.z of about 4,800; a M.sub.w of about 1,950; and a M.sub.n of about 650. Other PICCOLYTE.RTM. resins may also be used in the example gel material.

Another room temperature flowable resin which is useful in the plasticizer component of the example material is marketed as ADTAC.RTM. LV by Hercules Incorporated. That resin has a ring and ball softening point of about 5.degree. C.; melt viscosities of about 10 ps at about 62.degree. C., about 100 ps at about 36.degree. C. and about 1,000 ps at about 20.degree. C.; a MMAP value of about 93.degree. C.; a DACP value of about 44.degree. C.; an OMSCP value of less than about-40.degree. C.; a M.sub.z of about 2,600; a M.sub.w of about 1,380; and a M.sub.n of about 800.

Resins such as the liquid aliphatic C-5 petroleum hydrocarbon resin sold as W INGTACK.RTM. 10 by the Goodyear Tire & Rubber Company of Akron, Ohio and other WINGTACK.RTM. resins are also useful in the gel material. WINGTACK.RTM. 10 has a ring and ball softening point of about 10-degree. C.; a Brookfield Viscosity of about 30,000 cps at about 25.degree. C.; melt viscosities of about 10 ps at about 53.degree. C. and about 100 ps at about 34.degree. C.; an onset T.sub.g of about -37.7.degree. C.; a M.sub.n of about 660; a M.sub.w of about 800; a 1:1 polyethylene-to-resin ratio cloud point of about 89.degree. C.; a 1:1 microcrystalline wax-to-resin ratio cloud point of about 77.degree. C.; and a 1:1 paraffin wax-to-resin ratio cloud point of about 64.degree. C.

Resins that are not readily flowable at room temperature (i.e., are solid, semi-solid, or have an extremely high viscosity) or that are solid at room temperature are also useful in the example gel material. One such solid resin is an aliphatic C-5 petroleum hydrocarbon resin having a ring and ball softening point of about 98.degree. C.; melt viscosities of about 100 ps at about 156.degree. C. and about 1000 ps at about 109.degree. C.; an onset T.sub.g of about 46.1.degree. C.; a M.sub.n of about 1,130; a M.su b.w of about 1,800; a 1:1 polyethylene-to-resin ratio cloud point of about 90.degree. C₋; a 1:1 microcrystalline wax-to-resin ratio cloud point of about 77.degree. C.; and a 1:1 paraffin wax-to-resin ratio cloud point of about 64.degree. C. Such a resin is available as WINGTACK.RTM. 95 and is manufactured by Goodyear Chemical Co.

Polyisobutylene polymers are an example of resins which are not readily flowable at room temperature and that are useful in the example gel material. One such resin, sold as VlSTANEX.RTM. LM-MS by Exxon Chemical Company of Houston, Tex., has a Tg of -60.degree. C., a Brookfield Viscosity of about 250 cps to about 350 cps at about 350.degree. F., a Flory molecular weight in the range of about 42,600 to about 46,100, and a Staudinger molecular weight in the range of about 10,400 to about 10,900. The Flory and Staudinger methods for determining molecular weight are based on the intrinsic viscosity of a material dissolved in diisobutylene at 20.degree. C-

Glycerol esters of polymerized rosin are also useful as plasticizers in the example gel material. One such ester, manufactured and sold by Hercules Incorporated as HERCULES.RTM. Ester Gum 10D Synthetic Resin, has a softening point of about 116.degree. C.

Many other resins are also suitable for use in the gel material. In general, plasticizing resins are example which are compatible with the B block of the elastomer used in the material, and non-compatible with the A blocks.

In some embodiments of the cushion according to the methods and structures, tacky materials may be desirable. In such embodiments, the plasticizer component of the gel material may include about 20 weight percent or more, about 40 weight percent or more, about 60 weight percent or more, or up to about 100 weight percent, based upon the weight of the plasticizer component, of a tackifier or tackifier mixture.

### iii. Plasticizer Mixtures

The use of plasticizer mixtures in the plasticizer component of the example gel material is useful for tailoring the physical characteristics of the example gel mate rial. For example, characteristics such as durometer, tack, tensile strength, elongation, melt flow and others may be modified by combining various plasticizers.

For example, a plasticizer mixture which includes at least about 37.5 weight percent of a paraffinic white mineral oil having physical characteristics similar to those of LP-150 (a viscosity of about 150 SUS at about 100.degree. F., a viscosity of about 30 centistokes (cSt) at about 40.degree. C., and maximum pour point of about -35.degree. F.) and up to about 62.5 weight percent of a resin having physical characteristics similar to those of REGALREZ.RTM. 1018 (such as a softening point of about 20.degree. C.; an onset T.sub.g of about -20.degree. C.; a MMAP value of about 70.degree. C.; a DACP value of about 15.degree. C.; an OMSCP value of less than about -40.degree. C.; and M.sub.w of about 400), all weight percentages being based upon the total weight of the plasticizer mixture, could be used in a gel cushioning medium. When compared to a material plasticized with the same amount of an oil such as LP-150, the material which includes the plasticizer mixture has decreased oil bleed and increased tack.

Applicant believes that, when resin is included with oil in a plasticizer mixture of the example gel for use in cushions according to the methods and structures, the material exhibits reduced oil bleed. For example, a formulation of the material which includes a plasticizing component which has about three parts plasticizing oil (such as LP-150), and about five parts plasticizing resin (such as REGALREZ.RTM. 1018) exhibits infinitesimal oil bleed at room temperature, if any, even when placed against materials with high capillary action, such as paper. Prior art thermoplastic elastomers bleed noticeably under these circumstances.

The plasticizer:block copolymer elastomer ratio, by total combined weight of the plasticizer component and the block copolymer elastomer component, of the example gel cushioning material for use in the cushions of the methods and structures ranges from as low as about 1:1 or less to higher than about 25:1. In applications where plasticizer bleed is acceptable, the ratio may as high as about 100:1 or more. Especially example are plasticizer:block copolymer ratios in the range of about 2.5:1 to about 8:1. A example ratio, such as 5:1 provides the desired amounts of rigidity, elasticity and strength for many typical applications. Another example plasticizer to block copolymer elastomer ratio of the example gel material is 2.5:1, which has an unexpectedly high amount of strength and elongation.

### Applications

The methods and structures herein described applies to molding thermoplastic parts of various sizes but is particularly useful for economically molding large thermoplastic or gelatinous parts. In another aspect of the methods and structures thermoplastic parts that are too soft to be ejected from injection molds by the usual ejector pin method can be molded by the methods and structures. By way of example, an open grate structure 2 m long and 1 m wide by 40 mm deep would require a highly expensive and very complex injection mold, and would require a very large and expensive injection molding machine. The same grate could possibly be made by profile extrusion, but the complexity of the task would discourage those skilled in the art. In addition, the size of the die would be prohibitive. The methods and structures provides less complexity of construction and less costly while still producing excellent quality parts without knit lines common in injection molding.

In yet another aspect of the methods and structures, thermoplastic material may be used. When a rigid material is used, the part must be mechanically pushed from the mold by ejector pins or other means. In still another aspect of the methods and structures, gelatinous materials may be used. When gelatinous elastomeric mate rial is used, the molded part can be pulled from the mold by pulling or stretching the part until it comes free from the mold.

The methods and structures will work with rigid or soft highly elongatable gels, or materials with elasticity in between.

While the methods and structures has been described and illustrated in conjunction with a number of specific configurations, those skilled in the art will appreciate that var iations and modifications may be made without departing from the scope of the appended claims.

## Claims

1. A screed mold method for making gelatinous elastomer gel cushioning articles (300), the method comprising the steps of:
obtaining a screed mold (100),
the screed mold having a rigid body,
the screed mold being an open face mold,
the screed mold having a structural shape in said rigid body in which gel may be formed to take on a desired geometric structure, said structural shape including slots (101, A111) in said rigid body, obtaining access to an injection head (200),
said injection head (200, 220) having a plurality of distribution channels (202, 221, 222) therein through which thermoplastic material may flow,
said distribution channels terminating in exit ports (211, 223, 224) through which thermoplastic material may exit said injection head and enter said screed mold,
accessing a pumping source,
utilizing said pumping source to pressurize thermoplastic material and force it into said injection head, through said distribution channels of said injection head, out of said exit ports of said injection head, into said screed mold, through said slots in said screed mold and out of said screed mold, and
receiving a cushioning element molded by said screed mold.

2. A screed mold method according to claim 1 in which:
the screed mold has a honeycomb shape in said rigid body in which gel may be formed to take on a desired geometric structure,
the screed mold includes a plurality of crisscrossing slots (101, A111) in said rigid body to form said honeycomb shape which establishes a mold core,
including the step of obtaining side rails (102) and
attaching side rails to the perimeter (105, A115) of the mold in order to surround the perimeter of the mold with side rails, wherein
said distribution channels (202, 221, 222) are subdivided into sub-distribution channels,
and
said injection head (200, 220) includes at least one heating element within it for heating thermoplastic material, and being positioned adjacent said screed mold in a location so that thermoplastic material may flow from said injection head
distribution channels out of said exit ports arid into said screed mold slots.

3. A method as recited in claim 1 or 2 wherein said recovering step includes periodically terminating pumping of thermoplastic material into said screed mold,
and during such period of termination, removing molded thermoplastic material from said screed mold (100).

4. A method as recited in claim 1 or 2 wherein said pumping is a continuous process, and molded thermoplastic material is recovered from said screed mold as unmolded thermoplastic material is forced into said screed mold (100).

5. A method as recited in claim 1 or 2 wherein molded thermoplastic material is recovered from said screed mold (100) by cutting it as it exits said screed mold due to new thermoplastic material being forced into said screed mold (100).

6. A method as recited in claim 1 or 2 wherein at least some of said slots (101, A111) are cut not more than 80% of the way through said rigid body.

7. A method as recited in claim 1 or 2 wherein at least some of said slots (101, A111) are cut all the way through said rigid body.

8. A method as recited in claim 1 or 2 wherein said rigid body is metallic.

9. A method as recited in claim 1 or 2 wherein said rigid body is non-metallic.

10. A method as recited in claim 1 or 2 wherein at least some of said slots (101, A111) cross each other in an "X" configuration.

11. A method as recited in claim 1 or 2 wherein at least some of said slots (101, A111) cross each other in a "+" configuration.

12. A method as recited in claim 1 or 2 wherein said slots (101, A111) are sized to permit thermoplastic material to flow therethrough when heated.

13. A method as recited in claim 1 or 2 further comprising at least one cooling channel in said distribution head (200, 220).

14. A method as recited in claim 1 or 2 further comprising the step of establishing a desired distance between said distribution head (200, 220) and said screed mold prior (100) to flow of thermoplastic material.

15. A method as recited in claim 1 or 2 wherein said thermoplastic material includes an A- B-A triblock copolymer.

16. A method as recited in claim 15 wherein said thermoplastic material includes a plasticizer.

## Patentansprüche

1. Glättformverfahren zur Herstellung polsternder Artikel (300) aus gelatinösem Elastomergel, wobei das Verfahren folgende Schritte umfasst:
Erhalten einer Glättform (100),
wobei die Glättform einen starren Körper besitzt,
wobei die Glättform eine offene Form ist,
wobei die Glättform eine Bauform in dem starren Körper besitzt, in der Gel ausgeformt werden kann, um eine gewünschte geometrische Struktur anzunehmen, wobei die Bauform Vertiefungen (101, A111) in dem starren Körper beinhaltet,
Herstellen des Zugangs zu einem Einspritzkopf (200),
wobei der Einspritzkopf (200, 220) eine Vielzahl von darin befindlichen Verteilungskanälen (202, 221, 222) besitzt, durch die thermoplastisches Material fließen kann,
wobei die Verteilungskanäle in Austrittsöffnungen (211, 223, 224) enden, durch die thermoplastisches Material aus dem Einspritzkopf austreten und in die Glättform eintreten kann,
Zugreifen auf eine Pumpquelle,
Verwenden der Pumpquelle, um das thermoplastische Material unter Druck zu setzen,
und Treiben des thermoplastischen Materials in den Einspritzkopf, durch die Verteilungskanäle des Einspritzkopfes, aus den Austrittsöffnungen des Einspritzkopfes heraus, in die Glättform, durch die Vertiefungen in der Glättform und aus der Glättform heraus, und
Erhalten eines polsternden Elements, welches durch die Glättform ausgeformt wurde.

2. Glättformverfahren nach Anspruch 1, bei dem:
die Glättform eine Wabenform in dem starren Körper besitzt, in der Gel ausgeformt werden kann, um eine gewünschte geometrische Struktur anzunehmen,
wobei die Glättform eine Vielzahl von im Kreuzmuster angeordneten Vertiefungen (101, A111) in dem starren Körper beinhaltet, um die Wabenform auszubilden, die einen Formkern schafft,
Einbeziehen des Schritts, Seitenleisten (102) zu erhalten, und
Anbringen der Seitenleisten am Umfang (105, A115) der Form, um den Umfang der Form mit Seitenleisten zu umgeben, wobei
die Verteilungskanäle (202, 221, 222) in Sub-Verteilungskanäle aufgegliedert sind, und
der Einspritzkopf (200, 220) wenigstens ein Heizelement darin beinhaltet, um das thermoplastische Material zu erwärmen, und benachbart zu der Glättform positioniert ist, in einer Position, die derart ist, dass thermoplastisches Material von den Verteilungskanälen des Einspritzkopfes aus den Austrittsöffnungen heraus und in die Vertiefungen der Glättform fließen kann.

3. Verfahren nach Anspruch 1 oder 2, wobei der Gewinnungsschritt beinhaltet, das Pumpen von thermoplastischem Material in die Glättform periodisch zu beenden, und während einer solchen Zeitspanne der Beendigung das ausgeformte thermoplastische Material aus der Glättform (100) zu entnehmen.

4. Verfahren nach Anspruch 1 oder 2, wobei das Pumpen ein kontinuierlicher Prozess ist, und das ausgeformte thermoplastische Material aus der Glättform gewonnen wird, während ungeformtes thermoplastisches Material in die Glättform (100) hinein getrieben wird.

5. Verfahren nach Anspruch 1 oder 2, wobei ausgeformtes thermoplastisches Material aus der Glättform (100) gewonnen wird, indem man es schneidet, wenn es aufgrund des neuen, in die Glättform (100) hineingetriebenen thermoplastischen Materials aus der Glättform austritt.

6. Verfahren nach Anspruch 1 oder 2, wobei wenigstens einige der Vertiefungen (101, A111) über nicht mehr als 80% der Wegstrecke durch den starren Körper eingeschnitten sind.

7. Verfahren nach Anspruch 1 oder 2, wobei wenigstens einige der Vertiefungen (101, A111) über die gesamte Wegstrecke durch den starren Körper eingeschnitten sind.

8. Verfahren nach Anspruch 1 oder 2, wobei der starre Körper metallisch ist.

9. Verfahren nach Anspruch 1 oder 2, wobei der starre Körper nicht-metallisch ist.

10. Verfahren nach Anspruch 1 oder 2, wobei wenigstens einige der Vertiefungen (101, A111) in einer "X"-Konfiguration kreuzartig zu einander angeordnet sind.

11. Verfahren nach Anspruch 1 oder 2, wobei wenigstens einige der Vertiefungen (101, A111) in einer "+"-Konfiguration kreuzartig zu einander angeordnet sind.

12. Verfahren nach Anspruch 1 oder 2, wobei die Vertiefungen (101, A111) so dimensioniert sind, dass sie das Durchfließen des thermoplastischen Materials im erhitzten Zustand erlauben.

13. Verfahren nach Anspruch 1 oder 2, weiterhin umfassend wenigstens einen Kühlkanal im Verteilungskopf (200, 220).

14. Verfahren nach Anspruch 1 oder 2, weiterhin umfassend den Schritt, einen gewünschten Abstand zwischen dem Verteilungskopf (200, 220) und der Glättform (100) vor dem Fluss des thermoplastischen Materials zu etablieren.

15. Verfahren nach Anspruch 1 oder 2, wobei das thermoplastische Material ein A-B-A-Triblock-Copolymer beinhaltet.

16. Verfahren nach Anspruch 15, wobei das thermoplastische Material einen Weichmacher beinhaltet.

## Revendications

1. Procédé de moulage par arasement pour fabriquer des articles de rembourrage gélatineux en gel élastomère (300), le procédé comprenant les étapes consistant à :
obtenir un moule à araser (100),
le moule à araser ayant un corps rigide,
le moule à araser étant un moule à face ouverte,
le moule à araser ayant un profilé dans ledit corps rigide dans lequel du gel peut être formé pour adopter une structure géométrique souhaitée, ledit profilé comprenant des fentes (101, A111) dans ledit corps rigide, ayant accès à une tête d'injection (200),
ladite tête d'injection (200, 220) comportant une pluralité de canaux de distribution (202, 221, 222) en son sein, à travers lesquels de la matière thermoplastique peut s'écouler,
lesdits canaux de distribution se terminant par des orifices de sortie (211, 223, 224) à travers lesquels de la matière thermoplastique peut quitter ladite tête d'injection et entrer dans ledit moule à araser,
accéder à une source de pompage,
utiliser ladite source de pompage pour mettre sous pression la matière thermoplastique et la forcer à l'intérieur de ladite tête d'injection, à travers lesdits canaux de distribution de ladite tête d'injection, hors desdits orifices de sortie de ladite tête d'injection, dans ledit moule à araser, à travers lesdites fentes dans ledit moule à araser et hors dudit moule à araser, et
recevoir un élément de rembourrage moulé par ledit moule à araser.

2. Procédé de moulage par arasement selon la revendication 1, dans lequel :
le moule à araser présente une forme en nid d'abeilles dans ledit corps rigide, dans laquelle du gel peut être formé pour adopter une structure géométrique souhaitée,
le moule à araser comporte une pluralité de fentes entrecroisées (101, A111) dans ledit corps rigide pour former ladite forme en nid d'abeilles qui établit un noyau de moule,
comprenant l'étape consistant à obtenir des rails latéraux (102), et
fixer des rails latéraux au périmètre (105, A115) du moule afin d'entourer le périmètre du moule avec des rails latéraux, dans lequel :
lesdits canaux de distribution (202, 221, 222) sont subdivisés en canaux de sous-distribution, et
ladite tête d'injection (200, 220) comprend en son sein au moins un élément chauffant destiné à chauffer la matière thermoplastique et étant positionné au voisinage dudit moule à araser à une position telle que la matière thermoplastique peut s'écouler à partir desdits canaux de distribution de la tête d'injection hors desdits orifices de sortie et dans lesdites fentes du moule à araser.

3. Procédé selon la revendication 1 ou 2, dans lequel ladite étape de récupération comprend le fait d'interrompre périodiquement le pompage de matière thermoplastique dans ledit moule à araser, et pendant une telle période d'interruption, le fait d'enlever la matière thermoplastique moulée dudit moule à araser (100).

4. Procédé selon la revendication 1 ou 2, dans lequel ledit pompage est un processus continu, et la matière thermoplastique moulée est récupérée dans ledit moule à araser à mesure que de la matière thermoplastique non moulée est forcée dans ledit moule à araser (100).

5. Procédé selon la revendication 1 ou 2, dans lequel la matière thermoplastique moulée est récupérée dans ledit moule à araser (100) en étant coupée à mesure qu'elle sort dudit moule à araser du fait que de la nouvelle matière thermoplastique est forcée dans ledit moule à araser (100).

6. Procédé selon la revendication 1 ou 2, dans lequel au moins certaines desdites fentes (101, A111) ne sont pas découpées à plus de 80 % du passage à travers ledit corps rigide.

7. Procédé selon la revendication 1 ou 2, dans lequel au moins certaines desdites fentes (101, A111) sont découpées entièrement à travers ledit corps rigide.

8. Procédé selon la revendication 1 ou 2, dans lequel ledit corps rigide est métallique.

9. Procédé selon la revendication 1 ou 2, dans lequel ledit corps rigide est non métallique.

10. Procédé selon la revendication 1 ou 2, dans lequel au moins certaines desdites fentes (101, A111) se croisent les unes les autres en une configuration en « X ».

11. Procédé selon la revendication 1 ou 2, dans lequel au moins certaines desdites fentes (101, A111) se croisent les unes les autres en une configuration en « + ».

12. Procédé selon la revendication 1 ou 2, dans lequel lesdites fentes (101, A111) sont dimensionnées pour permettre à de la matière thermoplastique de s'écouler à travers elles lorsqu'elle est chauffée.

13. Procédé selon la revendication 1 ou 2, comprenant en outre au moins un canal de refroidissement dans ladite tête de distribution (200, 220).

14. Procédé selon la revendication 1 ou 2, comprenant en outre l'étape consistant à établir une distance souhaitée entre ladite tête de distribution (200, 220) et ledit moule à araser (100) avant l'écoulement de la matière thermoplastique.

15. Procédé selon la revendication 1 ou 2, dans lequel ladite matière thermoplastique comprend un copolymère tribloc A-B-A.

16. Procédé selon la revendication 15, dans lequel ladite matière thermoplastique comprend un plastifiant.
